(19) Europäisches Patentamt
European Patent Office
Office européen des brevets

(11) **EP 4 567 373 A1**

(12) **EUROPEAN PATENT APPLICATION**
published in accordance with Art. 153(4) EPC

(43) Date of publication:
**11.06.2025  Bulletin 2025/24**

(21) Application number: **23849360.5**

(22) Date of filing: **31.07.2023**

(51) International Patent Classification (IPC):
**G01B 11/25** (2006.01)      **G06T 7/514** (2017.01)
**A61B 6/03** (2006.01)

(52) Cooperative Patent Classification (CPC):
**A61B 6/03; G01B 11/25; G06T 7/514**

(86) International application number:
**PCT/CN2023/110258**

(87) International publication number:
**WO 2024/027653 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.08.2022  CN 202210933165
16.06.2023  CN 202310720978**

(71) Applicant: **Shanghai Percipio Technology Limited
Shanghai 201203 (CN)**

(72) Inventors:
• **WANG, Minjie
  Shanghai 201203 (CN)**
• **LIANG, Yushi
  Shanghai 201203 (CN)**

(74) Representative: **Herzog IP Patentanwalts GmbH
Steinstraße 16-18
40212 Düsseldorf (DE)**

(54) **DEPTH DATA MEASUREMENT APPARATUS AND APPLICATION METHOD THEREFOR**

(57)    A depth data measurement device, and a corresponding application method are disclosed. The measurement device includes: a projection assembly for projecting linear light onto an imaging object in relative motion; an image sensor for imaging based on the reflected light of the linear light, the each pixel sending a valid signal with a timestamp when the change in the amount of light received per unit time exceeds a threshold; and a processor for calculating the surface depth information of the object based on the positions of pixels corresponding to the valid signals, the timestamps of those valid signals, as well as the relative motion information. The present invention employs linear light to achieve active illumination and imaging of an object undergoing relative motion, and combines an image sensor in which each pixel can independently generate a valid signal when the brightness changes, so that imaging can be performed only for the valid signal, and the timestamp and relative motion information are used to determine the position of the depth data, thereby realizing high-speed depth information acquisition and processing with a simple projection mechanism and extremely low computing power requirements.

FIG.2

EP 4 567 373 A1

**Description**

**TECHNICAL FIELD**

The present disclosure relates to the field of three-dimensional imaging, in particular to a depth data measurement device and an application method thereof.

**BACKGROUND**

A depth camera is an acquisition device that acquires depth information of a target object. This type of camera is widely used in 3D scanning, 3D modeling and other fields. For example, more and more smartphones are now equipped with depth cameras for face recognition.

In the prior art, it is preferred to use more and more complex devices and projected patterns to achieve high-precision imaging. High-precision imaging usually requires a high frame rate, which makes the processor computing power and bandwidth requirements of the depth data measurement device abnormally high.

For this reason, a solution is needed to obtain more accurate depth information at a lower computational cost.

**SUMMARY**

A technical problem to be solved by the present disclosure is to provide a depth data measurement device and an application method thereof. This solution employs linear light to achieve active illumination and imaging of an object with relative motion, and combines an image sensor in which each pixel can independently generate a valid signal when the brightness changes, so that imaging can be performed only for the valid signal, and the timestamp and relative motion information are used to determine the position of the depth data, thereby realizing high-speed depth information acquisition and processing with a simple projection mechanism and extremely low computing power requirements.

According to the first aspect of the present disclosure, a depth data measurement device is provided, including: a projection assembly for projecting linear light onto an imaging object in relative motion; an image sensor for imaging the object based on the reflected light of the linear light, the image sensor including a plurality of pixels, each pixel sending a valid signal with a timestamp when the change in the amount of light received per unit time exceeds a threshold; and a processor for calculating the surface depth information of the object based on the positions of pixels corresponding to the valid signals, the timestamps of those valid signals, as well as the relative motion information.

Optionally, the relative motion is the motion of the object relative to the depth data measurement device, and: when the depth data measurement device is stationary, obtaining the motion information of the object as the relative motion information; when the object is stationary, obtaining the motion information of the depth data measurement device as the relative motion information; or when the object and the depth data measurement device are both in motion, obtaining the relative motion information of the imaging object and the depth data measurement device as the relative motion information.

Optionally, the depth data measurement device further includes: a motion information acquisition device for acquiring the relative motion information.

Optionally, the image sensor includes: a first image sensor and a second image sensor disposed on both sides of the projection assembly, wherein the processor calculates the depth information of the object using the positions of pixels corresponding to the valid signals, the timestamps of those valid signals from the first image sensor and the second image sensor, and the first relative speed motion.

Optionally, the projection assembly projects linear light pulses at a predetermined frequency.

Optionally, the relative motion is the motion of the linear light projected by the projection assembly relative to the image sensor and the depth data measurement device, and the projection assembly performs scanning projection of the linear light by rotating a rotating mechanism.

Optionally, the projection assembly scans and projects a linear light moving along a first direction to the imaging area through the rotation of the rotating mechanism, wherein the length direction of the linear light is a second direction perpendicular to the first direction, and the scanning projection of the linear light forms a striped light pattern through brightness changes; the processor is used to generate a two-dimensional image of the striped light pattern based on the striped light pattern brightness corresponding to the pixel position and timestamp corresponding to the valid signal, and obtain the surface depth information of the imaging object in the imaging area according to the two-dimensional image.

Optionally, the projection assembly completes a pattern scanning projection within a scanning cycle T, and within the scanning cycle T, the projection assembly adjusts the brightness of the linear light in the moving projection according to the single striped light pattern to be projected, and the projection assembly adjusts the brightness of the linear light according to different striped light patterns in N consecutive scanning cycles T, and the processor generates N two-dimensional images corresponding to N striped light patterns based on the N scanning cycles T, and synthesizes a single depth image of the object in the imaging area according to the N two-dimensional images.

Optionally, the projection assembly completes a pattern scan within a scanning cycle T, and within the scanning cycle T, the projection assembly alternately adjusts the brightness of the linear light in the moving projection according to the N striped light patterns to be projected, and the processor generates N two-dimensional images corresponding to the N striped light patterns based on the one scanning cycle T, and synthesizes a single depth image of the object in the imaging area based on the N two-dimensional images.

Optionally, the projection assembly completes a scan within a scanning cycle T, and the processor assigns a brightness corresponding to a predetermined striped light pattern to the pixel position corresponding to the timestamp.

According to the second aspect of the present disclosure, a method for measuring volume information of items on a conveyor belt is provided, the method being performed by the depth data measurement device described in the first aspect, and comprising: projecting linear light onto an item on the conveyor belt; imaging the projected area of the item based on the reflected light of the linear light, and obtaining valid signals with timestamps; calculating the depth information of the item at the corresponding timestamp based on the pixel positions corresponding to the valid signals; and obtaining the motion information of the conveyor belt as the motion information of the item; and calculating the volume information of the item based on the depth information of the item at multiple timestamps and the motion information of the item.

Optionally, the moving direction of the conveyor belt is a first direction, and the length direction of the linear light is a second direction perpendicular to the first direction. The projection direction of the linear light is optionally perpendicular to the surface of the conveyor belt or a tangent to the surface of the conveyor belt.

According to the third aspect of the present disclosure, a method for detecting the surface state of an object is provided, the method being performed by the depth data measurement device as described in the first aspect, and comprising: projecting linear light onto the surface of an object; imaging the surface of the object based on the reflected light of the linear light, and obtaining valid signals with timestamps; calculating the depth information of the surface of the object at the corresponding timestamp based on the pixel position corresponding to the valid signal; obtaining the motion information of a motion device on which the depth data measurement device is installed; and determining the state of the surface position of the object corresponding to each timestamp based on the depth information of the surface of the object at multiple timestamps and the motion information.

Optionally, the depth information of the surface of the object at multiple timestamps can be compared with the depth information of the surface position of the object corresponding to the predetermined depth distribution pattern to determine the surface state of the object; and/or synthesizing the actual surface depth distribution of the object based on the depth information of the surface of the object at multiple timestamps and the surface position of the object corresponding to each timestamp, and determining the road surface state based on the road surface depth distribution of the object surface..

According to a fourth aspect of the present disclosure, a depth data measurement method is provided, comprising: projecting a linear light onto an imaging object in relative motion, wherein there is relative motion between the linear light and the imaging object; imaging the object based on reflected light of the linear light, and each pixel sending a valid signal with a timestamp when the change in the amount of light received per unit time exceeds a threshold; and calculating the surface depth information of the object based on the positions of pixels corresponding to the valid signals, the timestamps of those valid signals, as well as the relative motion information.

Optionally, projecting the linear light onto the imaging object comprises: scanning and projecting the linear light onto the imaging object by rotating a rotating mechanism; projecting the linear light in a direction that remains unchanged from the housing of a depth data measurement device, wherein there is relative motion between the depth data measurement device and the imaging object.

## BRIEF DESCRIPTION OF FIGURES

The above and other objects, features and advantages of the present disclosure will become more apparent by describing the exemplary embodiments of the present disclosure in more detail with reference to the accompanying drawings, wherein, in the exemplary embodiments of the present disclosure, the same reference numerals generally represent same parts.

FIGS. 1A-B show an example of projecting time-encoded stripe structured light.

FIG. 2 shows a schematic diagram of the composition of a depth data measurement device according to an embodiment of the present disclosure.

FIG. 3 illustrates a schematic flow chart of a method for measuring volume information of an item on a conveyor belt according to an embodiment of the present disclosure.

FIG. 4 shows an illustration of using the depth data measurement device of the present disclosure to measure the information of items on a conveyor belt in one embodiment.

FIGS. 5A-B show an example of measuring the information of items on a conveyor belt using a depth data measurement device.

FIG. 6 illustrates a schematic flow chart of a road condition detection method according to an embodiment of the present disclosure.

FIG. 7 illustrates a schematic diagram of the composition of a depth data measurement device according to an embodiment of the present disclosure.

FIG. 8 shows an example of a four-step phase-shifted sinusoidal wave striped light pattern.

FIG. 9 shows an example of linear light projection and imaging when there is and does not exist an object in the imaging area.

FIG. 10 shows the brightness distribution of each pattern within a subcycle $\mathcal{T}$ in a four-step phase-shifted striped light pattern.

FIGS. 11A-B show an example of the enlarged operation of the projection assembly shown in FIG. 7.

FIG. 12 shows a simplified perspective schematic diagram of the projection assembly used in the present disclosure.

FIG. 13 shows a schematic flowchart of a depth data measurement method according to an embodiment of the present disclosure.

## DETAILED DESCRIPTION

Preferred embodiments of the present disclosure will be described in more detail below with reference to the accompanying drawings. Although preferred embodiments of the present disclosure are shown in the drawings, it should be understood that the present disclosure can be embodied in various forms and should not be limited to the embodiments set forth herein. Rather, these embodiments are provided so that this disclosure will be thorough and complete, and will fully convey the scope of the disclosure to those skilled in the art.

In the field of computer vision technology that actively projects light and performs imaging based on the reflection of the projected light of an imaging object to obtain the depth information (three-dimensional information) of the object, structured light with a specific distribution pattern in the two-dimensional direction is usually selected.

Structured light technology is a technology that actively projects a known pattern into an imaging area, and the information of the deformation of the structured light pattern caused by the surface of an imaging object in the imaging area can be used to calculate the surface depth information of the object in the visual system. Structured light needs to be encoded, for example, a widely used structured light is stripe-encoded structured light.

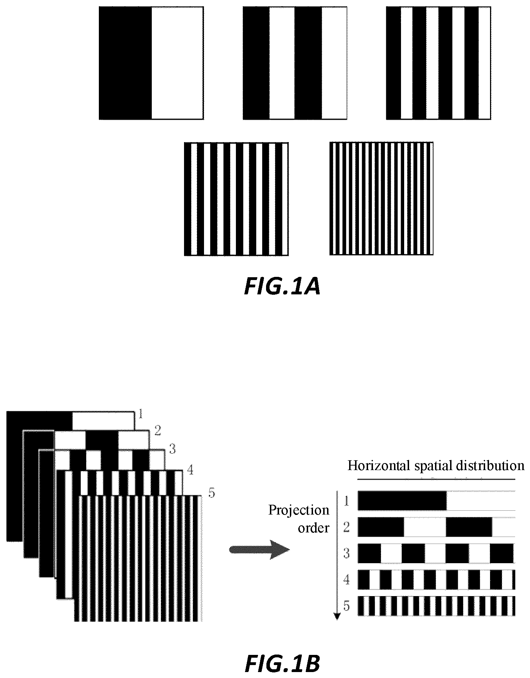

FIGS. 1A-B shows an example of projecting time-encoded stripe structured light. The figure briefly explains the encoding principle of stripe structured light with two gray level five bit of binary time encoding. A projection assembly can project five patterns as shown in FIG. 1A to an imaging area in sequence. In these five patterns, the projection space is divided into 32 areas with two gray levels of light and dark. The first projected pattern only includes two areas of dark on the left and bright on the right, the second pattern includes four areas of dark-bright-dark-bright from left to right, and so on, until the fifth pattern includes 32 areas formed by alternating dark and bright.

In each pattern, each area corresponds to its own projection angle, where it can be assumed that the bright area corresponds to the code "1" and the dark area corresponds to the code "0". The encoded values of a point on the object in the projection space in the five code patterns are combined in the projection order to obtain the area encoded value of the point, thereby determining the area where the point is located and then decoding to obtain the scanning angle of the point. FIG. 1B shows a schematic diagram of encoding according to five patterns. As shown, each pixel will obtain an encoded value of either "1" or "0" in the five images, so that each pixel can obtain a five-bit binary encoded value. In a monocular imaging system (that is, only one image sensor is used to image the five patterns), the decoding process may include comparison and calculation with the reference image encoded value. In a binocular imaging system, the above decoding process can be simplified by directly matching the encoded values of each point in the first and second image sensors.

In the case of obtaining the five patterns shown in FIG. 1A by turning the light on and off during scanning, assuming that the time for projecting a pattern is 32ms, then in the first 32ms, with the change of the scanning position, the linear light is first off for 16ms, and then on for 16ms; in the second 32ms, with the change of the scanning position, the linear light is first off for 8ms, then on for 8ms, then off for 8ms, and then on for 8ms; in the third 32ms, with the change of the scanning position, the linear light is first off for 4ms, then on for 4ms, and repeating 4 times; in the fourth 32ms, with the change of the scanning position, the linear light is first off for 2ms, then on for 2ms, and repeating 8 times; in the fifth 32ms, with the change of the scanning position, the linear light is first off for 1ms, then on for 1ms, and repeating 16 times. Thus, five scanning patterns are obtained in five 32ms.

It should be understood that in order to improve the matching accuracy, the number of projected patterns in the time encoding can be increased, such as 6, 7 or even more. For example, in the application scenario of binocular imaging, 10 time-encoded striped light patterns mean that, for example, each pixel in each left and right image frame contains 10 area encoded values that are either 0 or 1, thereby enabling matching between the left and right images with higher accuracy (e.g., pixel level). When the projection rate of the projection assembly remains unchanged, compared with the five encoded patterns in FIG. 1A, the example of 10 patterns is equivalent to achieving higher-precision image matching at a higher time domain cost (the time has doubled).

In order to project stripe-encoded structured light, a reflection mechanism is required to scan and project the linear light back and forth within a predetermined angle, and combine the corresponding on-off mode of the linear light to form a corresponding set of striped light patterns. This solution is complex and requires a lot of computing power. In view of this, the present disclosure proposes a depth data measurement solution with extremely high depth information acquisition speed and extremely low computing power requirements in an application scenario where there is relative motion between the projected linear light and an imaging object, by simply projecting linear light and combining an image sensor in which each pixel can independently generate a valid signal when the brightness changes.

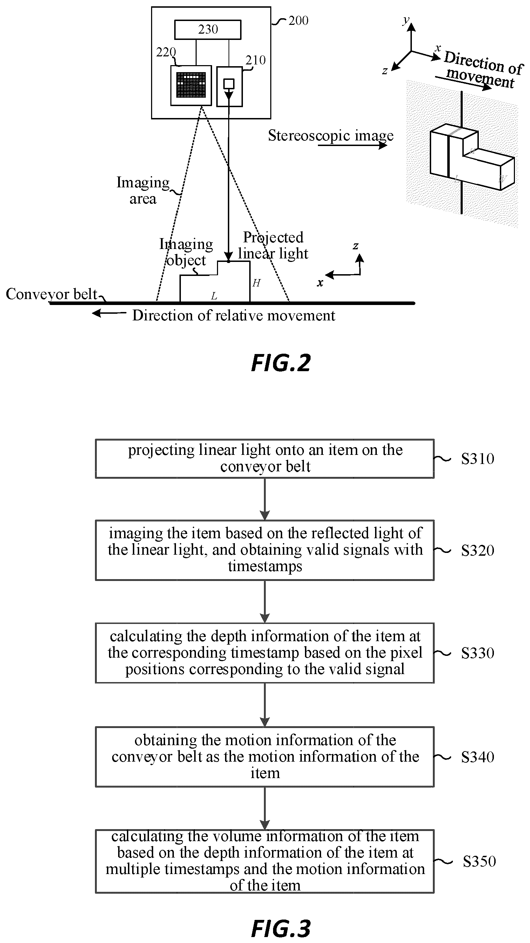

FIG. 2 illustrates a schematic diagram of the composition of a depth data measurement device according to an embodiment of the present disclosure. The left side shows an illustration of the depth data measurement device 200 projecting linear light and imaging an object with a relative motion relationship to it. The right side shows a stereoscopic image of the imaging object being scanned by the linear light. As shown on the left side, the measurement device 200 includes a projection assembly 210, an image sensor 220, and a processor 230.

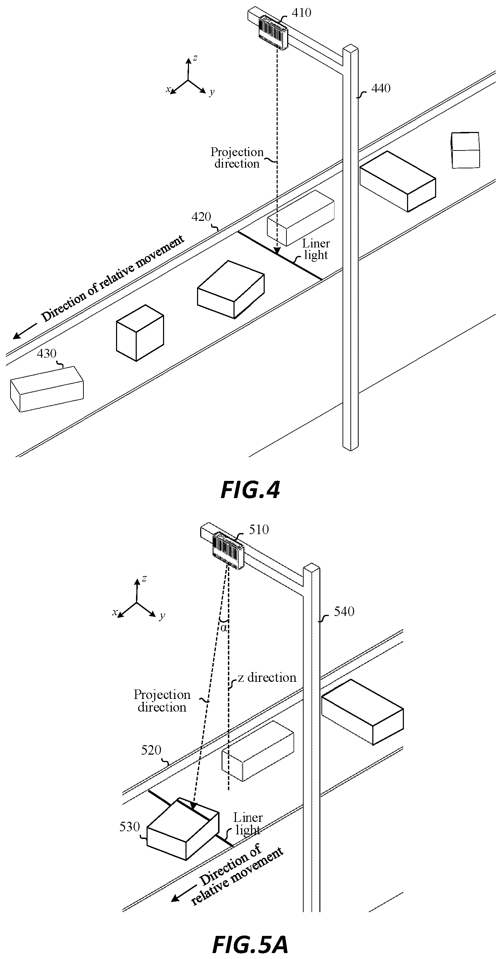

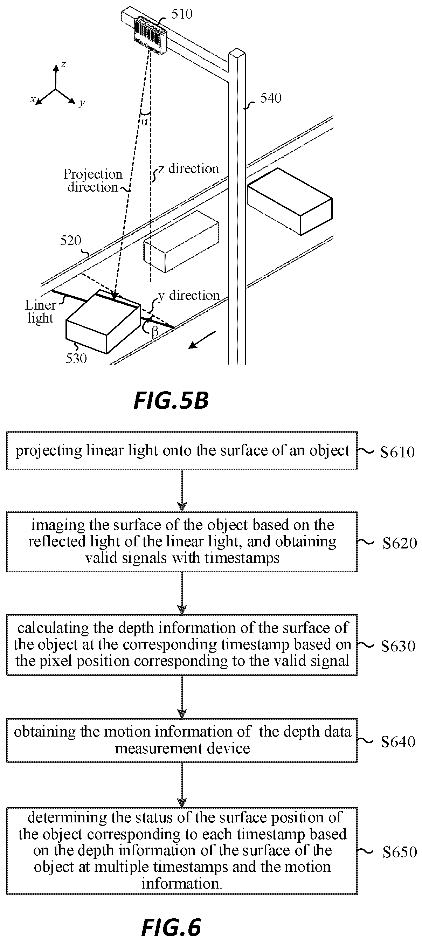

The projection assembly 210 is used to project linear light onto an imaging object with relative motion. In the illustrated example, the imaging object moves at a first speed in a first direction (illustrated as the x direction) at a uniform speed. The length direction of the linear light is a second direction (illustrated as the y direction) perpendicular to the first direction. Let the z direction be a direction perpendicular to both the x and y directions, that is, the vertical direction of the left side of the figure. In the illustrated example, the projection assembly 210 projects the linear light in the z direction, that is, vertically downward. In other embodiments, the second direction as the length direction of the linear light may also be non-perpendicular to the relative motion direction (as long as it is at a predetermined angle, that is, non-parallel). Similarly, the linear light may also be emitted in a direction other than the z direction (as long as it is at a predetermined angle, that is, non-parallel). This will be explained later in conjunction with the examples of FIG. 5A and FIG. 5B.

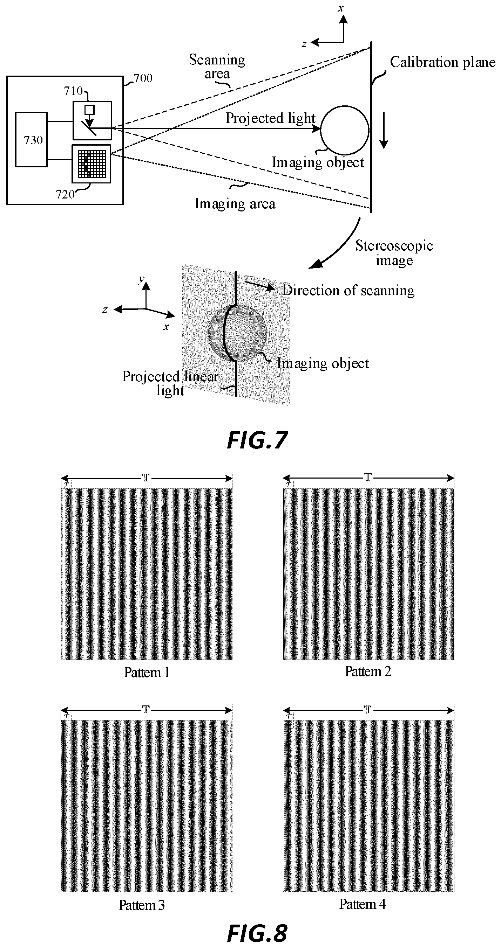

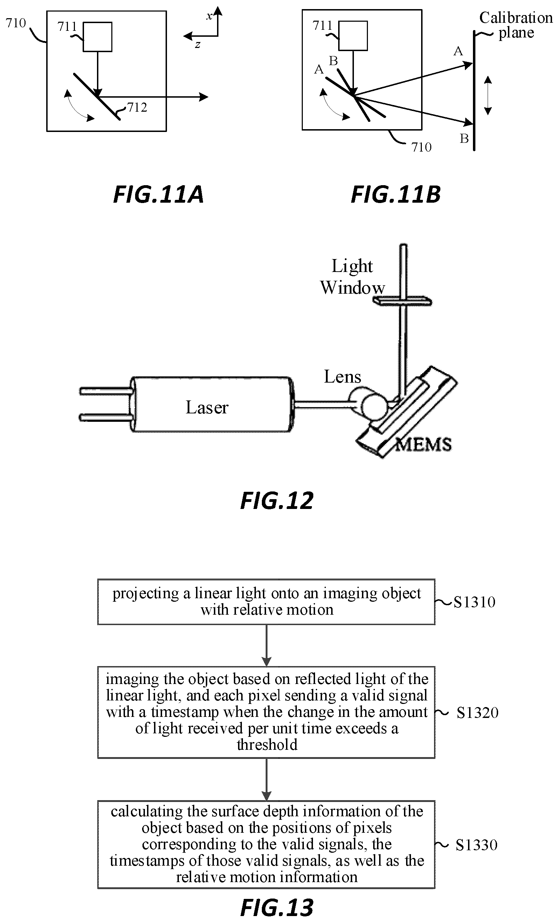

In the example of FIG. 2, the relative motion between the linear light and the imaging object is the relative motion between the depth data measurement device itself and the imaging object. The linear light projection angle of the projection assembly 210 is immobile relative to the other components and the housing of the depth data measurement device, that is, the projection assembly 210 does not include a reflection mechanism that can rotate so that the linear light scans within a predetermined angle. The linear light projected by the projection assembly 210 can image an entire imaging object (such as items on a conveyor belt) because there is relative motion between the depth data measurement device and the imaging object (in contrast, in the example of FIG. 7, the linear light projected by the projection assembly 710 itself is in motion relative to the other components and the housing of the depth data measurement device, that is, the projection assembly 710 includes a rotation mechanism that can rotate so that the linear light scans within a predetermined angle, such as shown in FIG. 11A-B and FIG. 12).

In different application scenarios, the relative motion between the depth data measurement device and the imaging object may be that the depth data measurement device is stationary and the imaging object is in motion; that the imaging object is stationary and the depth data measurement device is in motion; or that both are in motion, but the motions of the two are not in the same direction and at the same speed, that is, there is relative motion.

It can be seen that the relative motion is the relative motion of the imaging object relative to the depth data measurement device, and: when the depth data measurement device is stationary, obtaining the motion information of the imaging object as the relative motion information; when the imaging object is stationary, obtaining the motion information of the depth data measurement device as the relative motion information; or when the imaging object and the depth data measurement device are both in motion, obtaining the relative motion information of the imaging object and the depth data measurement device as the relative motion information.

The following will describe the implementation of the motion of the imaging object in combination with the conveyor belt item volume information detection solution; and the implementation of the motion of the depth data measurement device in combination with the object surface state detection solution.

In the example of FIG. 2, the imaging object is an item being conveyed on the conveyor belt. The item presents an irregular rectangular shape (which can be regarded as a shape obtained by putting together two rectangles of the same length but different heights and widths). The relative movement between the measurement device 200 and the imaging object is caused by the horizontal movement of the conveyor belt. That is, the measurement device 200 can be disposed at a lower portion of a cantilever above a conveyor belt, and project a linear light downward. The linear light projected onto the surface of the imaging object is shown as a point on the left side of FIG. 2 (because the left side of FIG. 2 is a plan view viewed from the y direction), while it is shown as a line in the stereogram on the right side. Since the linear light irradiates the upper surface of the imaging object, there is a height difference between the upper surface of the imaging object and the surface of the conveyor belt, and there is a fixed baseline distance between the projection assembly 210 and the image sensor 220, even if the projection assembly 210 projects the linear light vertically downward, linear light still appears as a broken line on the image sensor 220 which actually has parallax with the projection angle. There is a height difference between the straight line reflected from the upper surface of the object and the straight lines reflected from the conveyor belt on both sides. In this case, the height (H) and width (W) of the current position of the imaging object can be determined according to the position of the lit pixels on the forming image. Specifically, the height of the current position of the imaging object can be obtained according to the height difference between the central straight line and the straight lines on both sides, and the pixel positions where the central straight line and the straight lines on both sides are located. The width corresponding to the current position of the imaging object can be obtained based on the width of the central straight line and the pixel position of the central straight line.

Since linear light is projected, there are few pixels in the resulting image that actually carry depth information. For example, the image sensor 220 is shown as an 8x9=72 pixel sensor. When imaging the reflected linear light, only 9 pixels are lit (i.e., the number of pixels in 1 row). In actual application scenarios, the image sensor 220 usually has a higher pixel configuration, such as 600x800 pixels, and the reflected linear light can occupy more rows (e.g., 3x800=2400 pixels are lit) or columns (depending on the imaging direction), but most of the pixels in the image still do not carry any depth information at all. However, in the case of using a conventional image sensor, the processor still needs to fully process for example the 600x800 pixel image and then extract the desired depth information from it. Since only 3x800 pixels of the 600x800 pixels contain valid information, the conventional depth information processing method causes a lot of waste of the processor's computing power.

In view of this, the present disclosure employs a novel image sensor. Specifically, although the image sensor 220 can be used to image the imaging object based on the reflected light of the linear light like a conventional image sensor. However, among the multiple pixels included in the image sensor, each pixel can send a valid signal with a timestamp when the change in the amount of light received per unit time exceeds a threshold. In the example shown in FIG. 2, since only @4x1, @4x2, @2x3, @2x4, @2x5, @2x6, @2x7, @4x8, @4x9 are projected at the current moment $t_i$ and the change in the amount of light received per unit time exceeds the threshold, these 9 pixels can send valid signals with a current timestamp.

Here, the unit time can be a very small time, such as a time period of 1 $\mu$ s, and each pixel in the same image sensor can preferably calculate the unit time according to the same start and end time. The threshold can be set according to the application scenario, but it needs to be within the upper and lower limits that the image sensor can achieve. When the image sensor 220 actually has a pixel array of, for example, 800x600, each of the 480,000 pixels can independently generate and send a valid signal with a timestamp.

Corresponding to the imaging principle of the image sensor 220, in one embodiment, the projected linear light can be a constantly lit laser, and the pixels at the reflection positions of the leading edge (from no illumination to illumination) and trailing edge (from illumination to no illumination) of the linear light generate valid signals. In one embodiment, the projected linear light can be a laser pulse. The flashing frequency and pulse duration of the laser pulse can be reasonably selected according to the relative speed, the threshold, and the relative distance of the imaging object. In one embodiment, the projected linear light can be a high-frequency pulse light that flashes 20,000 times per second, thereby supporting high-speed surface defect detection.

After obtaining a valid signal, the processor 230 can calculate the surface depth information of the imaging object based on the positions of pixels corresponding to the valid signals, the timestamps of those valid signals and the relative motion information. The surface depth information of the imaging object can be used to obtain the volume information of the imaging object, for example, to obtain the length, width, and height information.

For example, in the example of FIG. 2, if the conveyor belt moves at a speed of 0.5 m/s, and the depth measuring device continuously obtains valid signals within the time stamps from 0 seconds to 1 second, it can be determined that the length L of the imaging object is 0.5 meters. And as mentioned above, the height (H) and width (W) of the current position of the imaging object can be determined according to the position of the pixels reporting valid signals corresponding to each time stamp. In the example of FIG. 2, since the height (H) of the front and rear of the imaging object is different, it will be reflected that the height difference between the middle pixel and the two side pixels reporting the valid information will be different.

When the depth data measurement device of the present disclosure performs depth measurement on the imaging object, it is usually necessary to know the value of the relative motion information, such as the speed value or the acceleration value, so as to realize, for example, the volume calculation of the imaging object, or to perform corresponding depth annotation on the specific imaging position of the imaging object. In this case, the depth data measurement device also needs to include: an information acquisition device for acquiring the value of the relative motion speed. In one embodiment, the motion information acquisition device can be a communication component for acquiring the value of the relative motion speed from the outside, for example, acquiring the current motor speed of the conveyor belt. In another embodiment, when applied to a scene where the imaging object is stationary and the depth data measurement device is in motion, the motion information acquisition device itself can be a measuring device, for example, an accelerometer, for measuring the acceleration of the position, and thereby obtaining the motion speed of the depth data measurement device itself.

The example shown in FIG. 2 shows a monocular depth data measurement device, that is, the measurement device includes only one image sensor. In a monocular setting, an additional calibration operation of the reference image is required. In other embodiments, the image sensor includes: a first image sensor and a second image sensor arranged on both sides of the projection assembly, wherein the processor calculates the depth information of the imaging object using the positions of pixels reporting the valid signals, the timestamps of those valid signals from the first image sensor and the second image sensor, as well as the first relative speed motion. The binocular solution uses the parallax of the signals included in the first image sensor and the second image sensor to perform depth calculation, and no longer requires calibration operations for the reference image, so it has a wider range of applications.

The depth data measurement device of the present disclosure can be used in various scenarios where there is a relative displacement between the measurement device and the imaging object. FIG. 3 illustrates a schematic flowchart of a method for measuring the volume information of items on a conveyor belt according to one embodiment of the present disclosure. The method can be executed by the depth data measurement device described above.

In step S310, projecting linear light onto an item on the conveyor belt. In step S320, imaging the item based on the reflected light of the linear light and acquiring valid signals with timestamps. In step S330, calculating the depth information of the item corresponding to the timestamps based on the pixel positions of the valid signals. In step S340, obtaining the motion information of the conveyor belt as the motion information of the item. In step S350, calculating the volume information of the item based on depth information at multiple timestamps of the item and the motion information of the item.

It should be understood that it takes a certain amount of time for the item to pass through the area projected by the linear light. For example, when the conveyor belt moves at 0.5 m/s, a 25 cm long package placed upright needs 0.5 seconds to complete the scanning of the linear light, that is, the time when the front edge of the package passes through the linear light differs from the time when the rear edge of the package passes through the linear light by 0.5 seconds. That is, the depth data measurement device disclosed in the present invention needs at least the time for an item to pass through the linear light to measure the volume of the item.

For ease of understanding, FIG. 4 shows an illustration of measuring information of items on a conveyor belt using a depth data measurement device of the present disclosure in one embodiment. FIG. 4 shows an illustration of using the depth data measurement device of the present disclosure to measure the information of items on a conveyor belt in one embodiment. As shown, a depth data measurement device 410 is mounted on a cantilever 440 for imaging items 430 on a conveyor belt 420. In the illustrated example, the depth data measurement device 410 projects linear light toward the z direction (i.e., the vertical direction), and the three items on the left (e.g., three express boxes) have been measured, and the fourth item will be measured later. Since no items pass through the current projection position, the projected linear light is displayed as a straight line. Accordingly, the pixels that also report valid signals in the image sensor of the measurement device 410 should also be located in a specific row (or a column, depending on the placement direction). Only one specific row of pixels reporting valid signals can be identified as not measuring items on the conveyor belt. And only when the pixels reporting valid signals in the image sensor of the measurement device 410 are located in different rows, the length, width and height of the corresponding items are calculated.

In the preferred example shown in FIG. 4, the direction of movement of the conveyor belt is a first direction, and the length direction of the linear light is a second direction perpendicular to the first direction. The projection direction of the linear light is perpendicular to the surface of the conveyor belt or the tangent of the surface of the conveyor belt (when the conveyor belt has a certain curvature). In other examples, the length direction or projection direction of the linear light can also be other directions.

FIGS. 5A-B show an example of measuring the information of items on a conveyor belt using a depth data measurement device. In FIG. 5A, the length direction of the linear light is still the second direction perpendicular to the first direction of the conveyor belt movement. However, the projection direction of the linear light is not perpendicular to the surface of the conveyor belt, but has a certain angle $\alpha$ with the z direction. In this case, the length, width and height of the item can be calculated by a corresponding transformation based on this angle. Similarly, in FIG. 5B, not only is the projection direction of the linear light not perpendicular to the surface of the conveyor belt (that is, there is an angle $\alpha$ with the z direction), but the length direction of the linear light is also not perpendicular to the first direction of the conveyor belt movement, that is, there is an angle $\beta$ with the y direction. In this case, when calculating the length, width and height of the item, it is necessary to transform based on the values of both $\alpha$ and $\beta$.

As shown above, implementation examples of a fixed measurement device and moving imaging objects are provided. The measurement device disclosed in the present invention can also be applied to a scene where the imaging object is fixed and the measurement device itself moves.

FIG. 6 shows a schematic flow chart of a method for detecting the surface status of an object according to an embodiment of the present disclosure. The method can be performed by the depth data measurement device of the present disclosure as described above.

In step S610, projecting linear light onto the surface of the object. In step S620, imaging the surface of the object based on the reflected light of the linear light, and obtaining valid signals with timestamps. In step S630, calculating the depth information of the surface of the object to the corresponding timestamps based on the pixel positions of the valid signals. In step S640, obtaining the motion information (e.g., acceleration information) of the motion device on which the depth data measurement device is installed. Here, the motion information (e.g., acceleration information) can be used to acquire the road surface position corresponding to each timestamp. In step S650, determining the status of the object surface position at each timestamp based on the depth information of the object surface at multiple timestamps as well as the corresponding motion information.

In one embodiment, the surface of the object can be a road surface. The depth measurement device can be installed at the bottom of the vehicle to measure the road condition while the vehicle is in motion.

In one embodiment, the road surface can be a highway surface. In this case, the measurement device only needs to measure the flatness of the road surface. For example, under normal conditions, the pixel positions reporting valid signals should be located on the same row, or on a few adjacent rows. If several pixels reporting valid signals are found on higher or lower rows, it indicates the presence of a depression or a bump on the road surface, which requires maintenance. In this case, the timestamps corresponding to the valid signals of the depression or bump can be recorded, and the road position corresponding to these timestamps can be calculated based on speed information (e.g., acceleration data measured by an accelerometer), and repairs can be carried out subsequently.

In one embodiment, the road surface is a railway surface with a predetermined depth distribution pattern. The depth measurement device of the present disclosure can be installed on the bottom of a train or a specialized track inspection vehicle to detect the road condition. In this case, based on the depth information of the road surface at multiple timestamps, the road condition at each timestamp's corresponding road position can be determined, including: comparing the depth information of the road surface at multiple timestamps with the corresponding road position depth information of the predetermined depth distribution pattern to determine the road condition; and/or synthesizing the actual road surface depth distribution based on the depth information of the road surface at multiple timestamps and the corresponding road positions for each timestamp, and determining the road condition based on the actual road surface depth distribution. Since railway surfaces have track ties and uneven elevations, it is necessary to detect whether the synthesized surface distribution based on the depth information complies with the railway surface distribution when detecting the railway road condition.

The depth measurement device of the present disclosure can also be used for detecting surface defects on other objects, especially large objects (e.g., large ships). The surface of the object to be measured may have a predetermined profile. In this case, the depth information of the object surface at multiple timestamps can be compared with the predetermined profile of the corresponding object surface position to determine the object surface condition. In other embodiments, if the surface of the measured object is supposed to have a smooth distribution, the presence of depressions and bumps can be determined based on pixel positions, and defects can be detected.

As described above with reference to FIGS. 2-6, the method and application scenarios of the depth data measurement device when the relative motion between the linear light and the imaging object is caused by the relative motion between the depth data measurement device and the imaging object are outlined. In other embodiments, the relative motion between the linear light and the imaging object can be achieved by a projection assembly that projects the linear light moving within a predetermined angle. In this case, the rotation of the rotating mechanism contained within the projection assembly (e.g., back-and-forth motion within a predetermined angle) scans the linear light onto the imaging object. The linear light projected by the projection assembly itself is in motion relative to other components and the housing of the depth measurement device, while there is no relative motion between the other components and housing of the depth measurement device and the imaging object.

FIG. 7 illustrates a schematic diagram of the composition of a depth data measurement device according to one embodiment of the present disclosure. As shown, the measurement device 700 includes a projection assembly 710, an image sensor 720, and a processor 730.

The projection assembly 710 is used to project linear light moving in a first direction (illustrated as the x-direction) onto the imaging area, where the length direction of the linear light is preferably perpendicular to the first direction in a second direction (illustrated as the $\gamma$-direction). As shown, the linear light generated by the projection assembly 710 can be emitted in the z-direction (within its scanning range, such as within a $\pm 10°$ range of the z-direction) and projected onto the imaging area of the image sensor. In one embodiment, before obtaining depth data of the imaging object in the imaging area, an alignment operation can be performed first, such as aligning the scanning projection range of the projection assembly 710 with the imaging area of the image sensor 720. This alignment operation can be aided by a calibration plane. For example, without placing an imaging object, a relatively flat plane within the imaging area (e.g., a wall perpendicular to the z-direction) can be used as a calibration plane to scan a striped pattern, with imaging performed by the image sensor. The scanning angle of the projection assembly 710 and/or the imaging angle of the image sensor 720 can be adjusted to ensure that the image sensor can capture a complete projected image that roughly covers the entire imaging range of the image sensor.

In the example of FIG. 7, the image sensor is not a conventional global sensor or rolling shutter sensor, but each pixel in the sensor can generate and transmit a valid signal with a timestamp when the amount of transmitted light received by the pixel exceeds a threshold within a unit time.

Here, the unit time can be a very small period,

such as $1\mu s$, and each pixel in the same image sensor is preferably calculated with the same start and end times for the unit time. The threshold can be set according to the application scenario but must lie within the upper and lower limits that the image sensor can achieve.

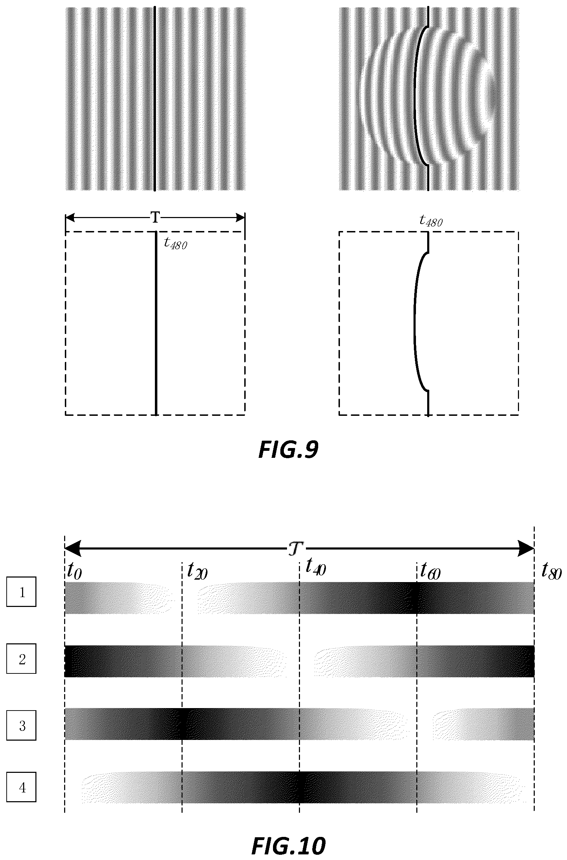

When the image sensor 720 has, for example, a 960x720 pixel array, each of the 691,200 pixels can independently generate and send a valid signal with a timestamp. For ease of explanation, an example based on four-step phase-shift striped light encoding will be described. FIG. 8 shows an example of a four-step phase-shifted sinusoidal wave striped light pattern. As shown, the four-step phase-shift sinusoidal encoding includes four patterns with a phase difference of $\pi/2$, and each pattern contains the same number of repeating subcycles $\mathcal{T}$ in one scanning period T (which will be explained in detail in FIG. 10), as shown in FIG. 8 with 16 repeating subcycles. In this example, taking the projection of pattern 1 from FIG. 8 as an example: At $t_0=0$, the linear light projected by the projection assembly 710 begins to illuminate the leftmost side of the imaging area. Since the leftmost side of the imaging area is not blocked by the imaging object, at the end of the unit time, i.e., at $t_1=1\mu s$, the amount of transmitted light received by the first pixel column of the image sensor 720 increases from 0 to $a_1$, where $a_1$ is greater than the threshold $a_0$, so each of the 720 pixels in the first pixel column generates a valid signal with a timestamp (for example, the valid signal can be represented as on@ $t_0$, indicating the start of the unit time, or as on@ $t_1$, indicating the end of the unit time. For convenience in the following descriptions, the representation at the end of the unit time will be uniformly adopted, meaning that the valid signal in this case is denoted as on@ $t_1$). Since the linear light is in motion (e.g., moving at a constant speed in the first direction), if the scanning speed of the linear light is set appropriately, the linear light will sweep across the imaging area of the first pixel column within the unit time from $t_0$ to $t_1$, and at $t_1=1\mu s$, it will begin scanning the imaging area corresponding to the second pixel column (when not blocked by the imaging object). Similarly, at the end of the unit time, i.e. at $t_2=2\mu s$, the amount of transmitted light received by the second pixel column of the image sensor 720 increases from 0 to $a_2$, where $a_2$ is also greater than the threshold $a_0$, so each of the 720 pixels in the second pixel column generates a valid signal with a timestamp (e.g., marked as on@ $t_2$). Because the linear light is in motion, if the scanning speed is appropriately set, it will sweep across the imaging area of the second pixel column from $t_1$ to $t_2$, and at $t_2=2\mu s$, it will begin scanning the imaging area corresponding to the third pixel column (unobstructed by the object being imaged). This continues, and eventually, at $t_{959}=959\mu s$, the scanning of the imaging area corresponding to the last pixel column (the 960th column) will begin, and at $t_{960}=960\mu s=0.96ms$, the scanning of the 1000th pixel column's corresponding imaging area will be completed, where the transmitted light received by the last pixel column increases from 0 to $a_{960}$, and $a_{960}$ is also greater than the threshold $a_0$, so each of the 720 pixels in the last pixel column generates a valid signal with a timestamp (e.g., marked as on@ $t_{960}$).

Thus, the processor 730 can generate a two-dimensional image of the striped light pattern based on the brightness of the striped light pattern corresponding to the timestamps and the positions of the pixels that report valid signals, and calculate the depth information of the imaging object in the imaging area based on this two-dimensional image.

Similarly, in the example above, during the 0.96 ms period from $t_0=0$ to $t_{960}=960\mu s$, the projection assembly 710 completes one scan of the linear light, for example, a left-to-right scan, which may correspond to a scan from the single scan starting position AA' to the single scan ending position BB' in FIG. 7.

When the scanning speed and the scanning positions of the projection assembly as described above are well coordinated with the corresponding imaging area ranges of each pixel column of the image sensor 720, if there is no imaging object in the imaging area and only a wall perpendicular to the projection direction exists, as shown in the calibration plane in FIG. 7, the processor 730 can receive valid signals from each pixel column of the image sensor 420 at each of the 960 moments, from $t_1=1\mu s$ to $t_{960}=960\mu s$. For example, at $t_1$, the valid signal from the first pixel column is received, at $t_2$ the valid signal from the second pixel column is received, and so on, until at $t_{960}$, the valid signal from the last pixel column is received. The processor can then reconstruct the pattern 1 shown in FIG. 8 based on the corresponding timestamps. As shown in the example, the pixels with a valid signal at timestamp $t_1$ are assigned the brightness corresponding to the striped light pattern at $t_1$, and the pixels with a valid signal at $t_2$ are assigned the brightness corresponding to the striped light pattern at $t_2$, and so on, ultimately resulting in the two-dimensional image of the striped light pattern.

However, when the imaging area includes an imaging object, the projected linear light will change due to reflections from the object. In this case, the pixels reporting valid signals at the same timestamp will no longer be limited to a single pixel column.

As shown in FIG. 7, when the imaging area includes a spherical object, the projected linear light will be distorted, and these distortions will be reflected in the changes in the reported valid signal pixel positions. From this, the depth information of the imaging object can be calculated.

For ease of understanding, FIG. 9 shows an example of linear light projection and imaging when there is and does not exist an object in the imaging area. The upper part of FIG. 9 shows the pattern to be projected by the projection assembly 710 (or in different embodiments, the pattern restored by the processor 730), and the lower part of FIG. 9 illustrates the pixel positions reporting valid signals at a certain moment caused by the sweep of linear light during the projection process.

Specifically, the left side of FIG. 9 shows the situation where there is no imaging object in the imaging area (for example, there is only one calibration wall perpendicular to the z direction), and the right side shows the situation where there is an imaging object in the imaging area (for example, the sphere shown in FIG. 7).

In one embodiment of the present disclosure, the projection assembly 710 can continuously change the intensity of the linear light during a scanning process, for example, from the scanning start position AA' to the scanning end position BB' shown in FIG. 7, so as to realize the projection of the striped structure light pattern shown in the upper left of FIG. 9 in a scanning cycle T. In the example above, the projection assembly 710 completes a linear light scan in the 0.96 ms time period from $t_0=0$ to $t_{960}=960 \mu$ s (here, for the sake of convenience, it can be assumed that the projection assembly needs 40 $\mu$ s to prepare for the next scan after completing a scan, so a scanning cycle T=960 $\mu$ s+40 $\mu$ s=1000 $\mu$ s=1ms can be set), at time $t_{480}$, the projection assembly 710 is scanning to the middle of the imaging area as shown in the lower left of FIG. 9, and the brightness of the linear light is the brightest. In this case, if there is no imaging object in the imaging area, the light intensity of the 480th column of pixels corresponding to the image sensor 720 changes within the unit time, and reports on@$t_{480}$). If the imaging area includes a spherical subject as shown on the right side of FIG. 9, then at time $t_{480}$, not all pixels in the 480th column of the image sensor 720 have light intensity changes in the unit time, but only the upper and lower pixels in the 480th column that are not blocked by the subject report on@$t_{480}$; the pixel reporting on@$t_{480}$ in the middle of the pixel array is located before the 480th column of the pixel. Thus, the depth data measurement device of the present disclosure can align the projection brightness with the pixel reporting the valid signal according to the timestamp, so that when the imaging area includes a spherical subject, the processor 420 reconstructs a two-dimensional stripe image similar to that shown in the upper right of FIG. 9 containing the depth information of the imaging object.

As described above, the processor 730 can be used to generate a two-dimensional image of the striped light pattern based on the striped light pattern brightness corresponding to the timestamp and the pixel positions reporting the valid signals, and obtain the depth information of the imaging object in the imaging area according to the two-dimensional image. In some embodiments, the striped light pattern brightness corresponding to the timestamp can be the striped light image brightness actually projected by the projection assembly 710 at the corresponding timestamp. In other embodiments, since each pixel of the image sensor 720 can only report a valid signal when the change in luminous flux per unit time is greater than a threshold value (in other words, the valid signal itself cannot represent the intensity of the projected linear light), the brightness of the striped light pattern corresponding to the timestamp may not be the brightness of the striped light image actually projected by the projection assembly 710 at the corresponding timestamp (in this case, the projection assembly 710 only needs to ensure that the linear light sweeping will cause the corresponding pixel to report a valid signal), but only the brightness corresponding to the predetermined striped light pattern.

First, a more easily understood embodiment is described, in which the striped light pattern brightness corresponding to a timestamp is the actual brightness of the striped light patten projected by the projection assembly 710 at the corresponding timestamp.

As mentioned above, stripe structured light encoding usually requires multiple projections of different striped light patterns, and the depth information of the imaging object is obtained based on the pixel encoding of multiple patterns. For example, in the example of time-coded stripe structured light shown in FIGS. 1A-B, five different striped light patterns need to be projected successively to generate a depth image. In the example of four-step phase-shifted sine wave stripe structured light shown in FIG. 8, four different striped light patterns need to be projected successively to generate a depth image.

In this case, in one embodiment of the present disclosure, the projection assembly 710 can be used to complete a pattern scan within a scanning cycle T, and within the scanning cycle T, the projection assembly adjusts the brightness of the linear light in the moving projection according to the single striped light pattern to be projected, and the projection assembly adjusts the brightness of the linear light according to different striped light patterns in N consecutive scanning cycles T, and the processor generates N two-dimensional images corresponding to the N striped light patterns based on the N scanning cycles T, and synthesizes a single depth image of the imaging in the imaging area according to the N two-dimensional images.

Taking the patterns shown in FIG. 8 as an example, the projection assembly 710 can project pattern 1 in the first scanning process from the scanning start position AA' to the scanning end position BB' shown in FIG. 7; in the second scanning process from AA' to BB', it can project pattern 2; in the third scanning process from AA' to BB', it can project pattern 3; in the fourth scanning process from AA' to BB', it can project pattern 4. Each projection corresponds to a projection cycle T. When T=1ms, it takes 4ms to project 4 patterns. For each projection, the linear light can change the brightness according to the corresponding striped light pattern during the projection process, match the appropriate projection speed, and assign brightness to the corresponding pixel position according to the timestamp of the valid signal. Therefore, after four projections, the processor synthesizes 4 two-dimensional images, and synthesizes a single depth image of the imaging object in the imaging area based on these 4 two-dimensional images.

In another embodiment of the present disclosure, multiple patterns can also be projected in one scan. In this case, the projection assembly completes a pattern scan within a scanning period T. Within the scanning period T, the projection assembly alternately adjusts the brightness of the linear light in the moving projection according to the N striped light patterns to be projected. The processor generates N two-dimensional images corresponding to the N striped light patterns based on the one scanning period T, and synthesizes a single depth image of the imaging object in the imaging area based on the N two-dimensional images.

The following will describe the projection and imaging solutions of scanning a single pattern in one cycle and scanning multiple patterns in one cycle, respectively, in conjunction with FIG. 10. Specifically, FIG. 10 illustrates the brightness distribution of each pattern within a subcycle $\mathcal{T}$ of the four-step phase-shifted striped light pattern. As shown, patterns 1-4 follow the brightness distribution as follows:

$$P1 = Q/2 * \sin\theta + Q/2$$

$$P2 = -Q/2 * \cos\theta + Q/2$$

$$P3 = -Q/2 * \sin\theta + Q/2$$

$$P4 = Q/2 * \cos\theta + Q/2$$

where Q is the brightness at the brightest point of the pattern, and $\theta$ is the four-step phase-shift angle corresponding to the time t.

In the example shown in FIG. 8, each scanning pattern includes 16 repeating subcycles $\mathcal{T}$. When the imaging area fully corresponds to the projection area, this means that the 960 columns of pixels of the image sensor correspond to 16 subcycles $\mathcal{T}$, with each subcycle $\mathcal{T}$ corresponding to 80 columns of pixels. According to the above example, the linear light requires $80\mu s$ to scan one of the patterns 1-4, which corresponds to one subcycles $\mathcal{T}$, as shown in FIG. 10. When the pattern shown in FIG. 10 corresponds to the stripe of the first subcycles $\mathcal{T}$, the stripe begins at $t_0$ and ends at $t_{80}$.

In an example where the projection assembly 710 completes a pattern scan within one scanning cycle T, the projection assembly 710 can first project Pattern 1 as shown in FIG. 8, i.e., repeat the projection of the stripe of the subcycles $\mathcal{T}$ of Pattern 1 shown in FIG. 10 16 times, thus taking 1ms. Accordingly, the image sensor 720 records the valid signals with timestamps during the first scanning cycle, allowing processor 730 to assign brightness values to the respective pixel positions based on the timestamps, thereby generating the first two-dimensional image obtained by scanning Pattern 1. Subsequently, the projection assembly 710 can project Pattern 2 as shown in FIG. 8, i.e., repeat the projection of the stripe of the subcycles $\mathcal{T}$ of Pattern 2 shown in FIG. 10 16 times, thus taking 1ms. Correspondingly, the image sensor 720 records the valid signals with timestamps during the second scanning cycle, enabling the processor 730 to assign brightness values to the respective pixel positions based on the timestamps, thereby generating the second two-dimensional image obtained by scanning Pattern 2. Subsequently, projection assembly 710 can project Pattern 3 as shown in FIG. 8, i.e., repeat the projection of the stripe of the subcycles $\mathcal{T}$ of Pattern 3 shown in FIG. 10 16 times, thus taking 1ms. Correspondingly, the image sensor 720 records the valid signals with timestamps during the third scanning cycle, enabling processor 730 to assign brightness values to the respective pixel positions based on the timestamps, thereby generating the third two-dimensional image obtained by scanning Pattern 3. Finally, projection assembly 710 can project Pattern 4 as shown in FIG. 8, i.e., repeat the projection of the stripe of the subcycles $\mathcal{T}$ of Pattern 4 shown in FIG. 10 16 times, thus taking 1ms. Correspondingly, the image sensor 720 records the valid signals with timestamps during the fourth scanning cycle, enabling processor 730 to assign brightness values to the respective pixel positions based on the timestamps, thereby generating the fourth two-dimensional image obtained by scanning Pattern 4. In other words, during the time $t_0$ to $t_{960}$ of the first scanning cycle, each pixel in the image sensor completes its corresponding valid signal report. During the subsequent three scanning cycles, each pixel in the image sensor completes its corresponding valid signal report, and the valid signal reports from different scanning cycles are used to generate the respective two-dimensional images for each cycle. After completing four scans in 4ms, four two-dimensional images are obtained, and processor 730 can process these images to derive depth data of the object in the imaging area.

In an example where the projection assembly 710 performs multiple pattern scans within one scanning cycle T, brightness variations in the same position are projected. As shown in FIG. 10, at $t_0 = 0$, $P_1 = Q/2$, $P_2 = 0$, $P_3 = Q/2$, $P_4 = Q$. In this case, when the image sensor reports valid signals at a rate of $1\mu s$ per unit time, four intensity variations need to be projected at the initial position to complete the conversion projection for four patterns. Specifically, at $t_{0\_1} = 0$, the linear light intensity is Q/2; at $t_{0\_2} = 1\mu s$, the linear light intensity is 0; at $t_{0\_3} = 2\mu s$, the linear light intensity is Q/2; at $t_{0\_4} = 3\mu s$, the linear light intensity is Q. At $t_1 = 4\mu s$ (corresponding to $\theta = 2\pi/80$), $P_1 = 0.54 * Q$, $P_2 = 0.02 * Q$, $P_3 = 0.46 * Q$, $P_4 = 0.998 * Q$. Similarly, at $t_{1\_1} = 4\mu s$, the linear light intensity is $0.54 * Q$; at $t_{1\_2} = 5\mu s$, the linear light intensity is $0.02 * Q$; at $t_{1\_3} = 6\mu s$, the linear light intensity is $0.46 * Q$; at $t_{1\_4} = 7\mu s$, the linear light intensity is $0.998 * Q$. In this case, a subcycle of intensity variation every $4\mu s$ is called a projection subcycle. Within one projection subcycle, the projection assembly switches between N different intensity levels at the same position corresponding to N patterns. As a result, at each time between $t_0$ and $t_{960}$, there are actually four submoments, and after $3840\mu s$ (= $960\mu s$ x 4), the projection of four patterns occurs 960 times each. In this implementation, the projection assembly 710 alternately projects linear light at the brightness corresponding to the N positions of the striped light patterns, and the processor associates the pixel positions of the valid signals with the linear light projection brightness based on the timestamps, categorizing them into N categories corresponding to each striped light pattern (for example, time stamps that are divisible by 4 are considered to correspond to pattern 1, time stamps with a remainder of 1 when divided by 4 are considered to correspond to pattern 2, time stamps with a remainder of 2 when divided by 4 are considered to correspond to pattern 3, and time stamps with a remainder of 3 when divided by 4 are considered to correspond to pattern 4). This generates N two-dimensional images corresponding to the N striped light patterns, which are then combined to synthesize a single depth image of the object in the imaging area.

In one embodiment, the projection position of the linear light can remain unchanged within each projection subcycle. For example, the projection assembly can hold each position for $4\mu s$ for each pixel column to complete the switching of brightness corresponding to four patterns, then move to the next position and again hold for $4\mu s$, and so on. In another embodiment, within one projection subcycle, the linear light projected by the projection assembly moves over a distance in the imaging area no greater than the corresponding width of a single pixel column. In other embodiments, different pixel columns can be selected to correspond to different patterns (in this case, precise calibration of the scanning position and imaging area is required).

In the solution for scanning multiple patterns in one scan, the N striped light patterns are those in which no pixel at the same position between adjacent patterns has the same brightness, such as the four sine wave four-step phase-shift patterns shown in FIGS. 8 and 10.

As mentioned earlier, since the valid signal reported by each pixel of the image sensor 720 does not directly represent the light intensity of the current projected linear light, the brightness of the striped light pattern corresponding to the timestamp may not be the actual brightness of the stripe image projected by the projection assembly 710 at that timestamp. In this case, the projection assembly 710 can complete one scan within one scanning cycle T, and the processor 730 can assign brightness corresponding to predetermined striped light patterns to the pixel positions at the corresponding timestamps. Specifically, the processor can assign N brightness values corresponding to N predetermined striped patterns to the pixel positions at the corresponding timestamps, generating N two-dimensional images corresponding to the N striped light patterns, which are then combined to generate a single depth image of the object in the imaging area.

Here, using the four sine wave four-step phase-shift patterns shown in FIGS. 8 and 10 as an example to obtain depth data of the imaging object, assume that the projection assembly 710 completes a scan from position AA' to BB' within $960\mu s$. Therefore, the projection assembly 710 can scan the linear light with any brightness capable of causing the image sensor 720 to generate valid signals from the scanned pixels. For example, the projection assembly 710 can project linear light at a constant brightness above a threshold, while the pixels of the image sensor 720 report valid signals with timestamps as the linear light scans them. The processor 730 can then construct the corresponding two-dimensional image according to the striped light encoding algorithm (such as time encoding shown in FIG. 1B, sine wave four-step phase-shift encoding shown in FIG. 8, or other unshown encoding methods like square wave four-step phase-shift or Gray code). When using a 960x720 pixel image sensor 720, processor 730 can acquire valid signals with time stamps from to t960 from each pixel. The processor 730 then divides the preset pattern (for example, pattern 1 of the four-step phase-shift striped light pattern shown in FIG. 8) into 960 segments, obtaining 960 brightness distribution values along the first direction, and assigns these brightness values to the corresponding pixel positions based on the time stamps, thereby constructing the first two-dimensional image. Subsequently, processor 730 divides pattern 2 of the four-step phase-shift striped light pattern into 960 segments, obtaining 960 brightness distribution values along the first direction, and assigns these values to the corresponding pixel positions based on the time stamps, constructing the second two-dimensional image; divides pattern 3 of the four-step phase-shift striped light pattern into 960 segments, obtaining 960 brightness distribution values along the first direction, and assigns these values to the corresponding pixel positions based on the time stamps, constructing the third two-dimensional image; divides pattern 4 of the four-step phase-shift striped light pattern into 960 segments, obtaining 960 brightness distribution values along the first direction, and assigns these values to the corresponding pixel positions based on the time stamps, constructing the fourth two-dimensional image. Thus, using the valid signals reported by each pixel during a single scan from the projection assembly, processor 730 can construct any 2D image based on the brightness at corresponding positions in the predetermined image (typically a set of striped light images following a specific encoding algorithm, such as the four sine wave phase-shift striped light images shown in FIG. 8), and thus, calculate depth data of the imaged object, greatly improving computational efficiency.

In one embodiment, the projection assembly shown in FIG. 7 can use a linear light pulse, as shown in FIG. 2, for example, a pulse that turns on and off 20,000 times per second, instead of projecting specific striped light patterns.

In addition, it should be understood that, in the above example, an ideal condition is assumed for ease of understanding: the ideal linear light (i.e., an ideal "line segment" with no width) perfectly sweeps across the pixel width corresponding to a unit time interval. However, in practical operation, the linear light extending along the second direction often (in the first direction) has a certain width, and there may also be an uneven distribution of brightness in the width direction. Since the pixels of the image sensor report valid signals when the variation in light intensity exceeds a threshold within a unit time (either an increase or decrease in light intensity), the trailing edge or even the internal light intensity variation of the linear light may cause pixels to report valid signals. Therefore, when the pixels of the image sensor are angled with the second direction, preferably perpendicular to the first direction, and multiple pixels in the same pixel row report valid signals with the same timestamp, the processor 730 filters the pixels for two-dimensional image generation based on the light intensity distribution of the linear light in the first direction. For example, the processor 730 can directly select the valid signals reported by the leading edge of the linear light and ignore subsequent valid signals (for instance, when multiple adjacent pixels on the same pixel row report valid signals with the same timestamp due to the linear light, only the valid signal from the foremost pixel position is retained).

Additionally, when multiple pixels in the same pixel row send valid signals with the same timestamp, the processor deletes the pixels in the pixel row that are farther from the current scanning range for the generation of the two-dimensional image. For example, when the linear light just enters one side of the image sensor's imaging area, valid signals reported by pixels on the opposite side can be ignored, thereby avoiding the influence of noise signals.

Furthermore, when a single pixel sends multiple valid signals with successive timestamps, the processor selects one timestamp from the multiple successive timestamps as the valid signal timestamp for that pixel. For example, depending on the specific algorithm, either the first timestamp or the last timestamp can be selected. This is caused by the fact that in actual operation, the linear light is not an ideal line, but rather has width and brightness variations.

In the example shown in FIG. 7, the depth data measurement device of the present disclosure includes only a single image sensor 720. In other embodiments, the depth data measurement device of the present disclosure can include two image sensors, each comprising multiple pixels, where each pixel sends a timestamped valid signal when the amount of light passing through it exceeds a threshold within a unit time, thereby realizing a binocular setup.

Additionally, the projection assembly disclosed herein can achieve the scanning projection of the linear light through the rotation of a rotating mechanism. FIGS. 11A-B illustrate an enlarged operational example of the projection assembly shown in FIG. 7. Specifically, in the projection assembly 710, the laser emitted by the laser generator (e.g., laser generator 711) is scanned and projected onto a calibration plane (the gray area in FIG. 7) by the rotating mechanism (e.g., projection mechanism 712), used to project active structured light onto an object (e.g., the sphere in FIG. 7) in the imaging area. In practical applications, the laser generator 711 is used to generate linear infrared laser light. In different embodiments, the laser generator 711 can perform high-speed switching to scan and project alternating light and dark structured light corresponding to the striped encoding, where high-speed switching can include high-speed on and off of the laser generator and high-speed encoding switching. The laser generator 711 can also maintain a constant brightness during scanning without switching brightness (in this case, the processor 730 assigns brightness values based on predefined positions as described above).

In one embodiment, the laser generator 711 can be a linear laser generator that generates linear light extending in the y-direction (perpendicular to the paper plane in FIGS. 11A-B). This linear light is then reflected by the rotating mechanism 712, which can swing along the x-axis direction, and projected onto the imaging plane. The swing of the rotating mechanism 712 is shown in FIG. 11B. This enables reciprocal scanning of the linear light within the AB range (from AA' to BB').

In one embodiment, the rotating mechanism 712 can be a micro-mirror device (also known as a Digital Micromirror Device, DMD), and can be implemented as a MEMS (Micro-Electro-Mechanical Systems) device. FIG. 12 shows a simplified perspective diagram of the projection assembly used in this disclosure. As shown in FIG. 12, the point laser generated by the laser can be transformed into linear light via a lens (corresponding to the linear laser generator 411 in FIG. 11). The linear light is then reflected by the micro-mirror device in the form of MEMS, and the reflected linear light is projected into the external space through the optical window.

The present disclosure can also be implemented as a depth data measurement method. FIG. 13 illustrates a schematic flowchart of a depth data measurement method according to an embodiment of the present disclosure. This method can be executed by the depth data measurement device disclosed herein.

In step S1310, projecting linear light onto the imaging object, with relative motion existing between the linear light and the imaging object. In step S1320, imaging the imaging object based on the reflected light of the linear light, and sending a valid signal with a timestamp when the amount of light received by each pixel changes beyond a threshold within a unit time. In step S1330, calculating the surface depth information of the imaging object. based on the positions of pixels corresponding to the valid signals, the timestamps of those valid signals, as well as the relative motion information.

Projecting linear light onto the imaging object includes, as shown in FIGS. 7-12, scanning and projecting the linear light onto the imaging object via the rotation of the rotating mechanism. It can also include, as shown in FIGS. 2-6, projecting the linear light in a direction that remains constant relative to the housing of the depth data measurement device, with relative motion existing between the depth data measurement device and the imaging object.

When scanning and projecting the linear light onto the imaging object via the rotation of the rotating mechanism, alignment and calibration can be performed before measurement. To this end, the measurement method disclosed herein can further include aligning the scanning projection range of the projection assembly with the imaging area of the image sensor.

As described in detail above with reference to the accompanying drawings, the depth data measurement device and its application method according to the present disclosure utilize linear light to perform active light imaging of an imaging object with relative motion. Combining an image sensor that can independently generate a valid signal for each pixel when brightness changes, the method allows imaging only for the valid signals that change, and uses timestamps and relative motion information for depth data position determination. This enables high-speed depth information acquisition and processing with a simple projection mechanism and minimal computational requirements.

Having described various embodiments of the present disclosure, the foregoing description is exemplary, not exhaustive, and is not limited to the disclosed embodiments. Many modifications and alterations will be apparent to those of ordinary skill in the art without departing from the scope and spirit of the described embodiments. The terminology used herein is chosen to best explain the principle of each embodiment, practical application or improvement of technology in the market, or to enable other ordinary skilled in the art to understand each embodiment disclosed herein.

**Claims**

1. A depth data measurement device, comprising:

    a projection assembly for projecting a liner light onto an imaging object with relative motion;
    an image sensor for imaging the object based on the reflected light of the liner light, and each pixel sending a valid signal with a timestamp when the change in the amount of light received per unit time exceeds a threshold; and
    a processor for calculating the surface depth information of the object based on the positions of pixels corresponding to the valid signals, the timestamps of those valid signals, as well as the relative motion information.

2. The depth data measurement device according to claim 1, wherein the relative motion is the motion of the object relative to the depth data measurement device, and:

    when the depth data measurement device is stationary, obtaining the motion information of the object as the relative motion information; when the object is stationary, obtaining the motion information of the depth data measurement device as the relative motion information; or when the object and the depth data measurement device are both in motion, obtaining the relative motion information of the imaging object and the depth data measurement device as the relative motion information.

3. The depth data measurement device according to claim 2, wherein the depth data measurement device further includes:
a motion information acquisition device for acquiring the relative motion information.

4. The depth data measurement device according to claim 1, wherein the image sensor includes: a first image sensor and a second image sensor disposed on both sides of the projection assembly, wherein the processor calculates the depth information of the object using the positions of pixels corresponding to the valid signals and the timestamps of those valid signals from the first image sensor and the second image sensor, as well as the first relative motion speed.

5. The depth data measurement device according to claim 1, wherein the projection assembly projects linear light pulses at a predetermined frequency.

6. The depth data measurement device according to claim 1, wherein the relative motion is the motion of the linear light projected by the projection assembly relative to the image sensor and the depth data measurement device, and the projection assembly performs scanning projection of the linear light by rotating a rotating mechanism.

7. The depth data measurement device according to claim 1, wherein the projection assembly scans and projects a linear light moving along a first direction to the imaging area through the rotation of the rotating mechanism, wherein the length direction of the linear light is a second direction perpendicular to the first direction, and the scanning projection of the linear light forms a striped light pattern through brightness changes;
the processor is used to generate a two-dimensional image of the striped light pattern based on brightness of the striped light pattern corresponding to the pixel positions and timestamps corresponding to the valid signals, and obtain the surface depth information of the object in the imaging area according to the two-dimensional image.

8. The depth data measurement device according to claim 7, wherein the projection assembly completes a pattern scanning projection within a scanning cycle T, and within the scanning cycle T, the projection assembly adjusts the brightness of the linear light in the moving projection according to the single striped light pattern to be projected,

and the projection assembly adjusts the brightness of the linear light according to different striped light patterns in N consecutive scanning cycles T,
the processor generates N two-dimensional images corresponding to N striped light patterns based on the N scanning cycles T, and synthesizes a single depth image of the object in the imaging area according to the N two-dimensional images.

9. The depth data measurement device according to claim 7, wherein the projection assembly completes a pattern scan within a scanning cycle T, and within the scanning cycle T, the projection assembly alternately adjusts the brightness of the linear light in the moving projection according to the N striped light patterns to be projected, and
the processor generates N two-dimensional images corresponding to the N striped light patterns based on the one scanning cycle T, and synthesizes a single depth image of the object in the imaging area based on the N two-dimensional images.

10. The depth data measurement device according to claim 7, wherein the projection assembly completes a scan within a scanning cycle T, and the processor assigns a brightness corresponding to a predetermined striped light pattern to the pixel position corresponding to the timestamp.

11. A method for measuring volume information of items on a conveyor belt, the method being performed by the depth data measurement device according to any one of claims 1-5, and comprising:

projecting linear light onto an item on the conveyor belt;
imaging the item based on the reflected light of the linear light, and obtaining valid signals with timestamps;
calculating the depth information of the item at the corresponding timestamps based on the pixel positions corresponding to the valid signals;

obtaining the motion information of the conveyor belt as the motion information of the item; and
calculating the volume information of the item based on the depth information of the item at multiple timestamps and the motion information of the item.

12. A method for detecting the surface state of an object, the method being performed by the depth data measurement device according to any one of claims 1-5, and comprising:

projecting linear light onto the surface of the object;
imaging the surface of the road based on the reflected light of the linear light, and obtaining valid signals with timestamps;
calculating the depth information of the surface of the object at the corresponding timestamp based on the pixel positions corresponding to the valid signals;
obtaining the motion information of the depth data measurement device; and
determining the status of the surface position of the object corresponding to each timestamp based on the depth information of the surface of the object at multiple timestamps and the motion information.

13. The method according to claim 12, where determining the status of the surface position of the object corresponding to each timestamp based on the depth information of the surface of the object at multiple timestamps further includes:

comparing the depth information of the surface of the object at multiple timestamps with the depth information of the surface positions of the object corresponding to the predetermined depth distribution pattern to determine the surface status of the object; and/or
synthesizing the actual surface depth distribution of the object based on the depth information of the surface of the object at multiple timestamps and the surface positions of the object corresponding to timestamps, and determining the road surface status based on the road surface depth distribution of the object surface.

14. A depth data measurement method, comprising:

projecting a linear light onto an imaging object with relative motion;
imaging the object based on reflected light of the linear light, and each pixel sending a valid signal with a timestamp when the change in the amount of light received per unit time exceeds a threshold; and

calculating the surface depth information of the imaging object based on the positions of pixels corresponding to the valid signals, the timestamps of those valid signals, as well as the relative motion information.

15. The method according to claim 14, wherein projecting the linear light onto the imaging object further includes:

scanning and projecting the linear light onto the imaging object by rotating a rotating mechanism;
projecting the linear light in a direction that remains unchanged from to the housing of a depth data measurement device, where there is relative motion between the depth data measurement device and the object.

**FIG.1A**

**FIG.1B**

**FIG.2**

projecting linear light onto an item on the conveyor belt ~ S310

imaging the item based on the reflected light of the linear light, and obtaining valid signals with timestamps ~ S320

calculating the depth information of the item at the corresponding timestamp based on the pixel positions corresponding to the valid signal ~ S330

obtaining the motion information of the conveyor belt as the motion information of the item ~ S340

calculating the volume information of the item based on the depth information of the item at multiple timestamps and the motion information of the item ~ S350

**FIG.3**

**FIG.4**

**FIG.5A**

**FIG.5B**

projecting linear light onto the surface of an object — S610

imaging the surface of the object based on the reflected light of the linear light, and obtaining valid signals with timestamps — S620

calculating the depth information of the surface of the object at the corresponding timestamp based on the pixel position corresponding to the valid signal — S630

obtaining the motion information of the depth data measurement device — S640

determining the status of the surface position of the object corresponding to each timestamp based on the depth information of the surface of the object at multiple timestamps and the motion information. — S650

**FIG.6**

**FIG.7**

Pattern 1                    Pattern 2

Pattern 3                    Pattern 4

**FIG.8**

**FIG.9**

**FIG.10**

710  711

x
z

712

**FIG.11A**

711

A B
A

710

B

Calibration
plane

A

B

**FIG.11B**

Light
Window

Lens

Laser

MEMS

**FIG.12**

projecting a linear light onto an imaging object
with relative motion                                    ~S1310

imaging the object based on reflected light of the
linear light, and each pixel sending a valid signal
with a timestamp when the change in the amount    ~ S1320
of light received per unit time exceeds a
threshold

calculating the surface depth information of the
object based on the positions of pixels
corresponding to the valid signals, the           ~ S1330
timestamps of those valid signals, as well as the
relative motion information

**FIG.13**

## INTERNATIONAL SEARCH REPORT

International application No.

**PCT/CN2023/110258**

### A.    CLASSIFICATION OF SUBJECT MATTER

G01B11/25(2006.01)i;  G06T7/514(2017.01)i;  A61B6/03(2006.01)i

According to International Patent Classification (IPC) or to both national classification and IPC

### B.    FIELDS SEARCHED

Minimum documentation searched (classification system followed by classification symbols)

IPC:  G01B G06T A61B

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 深度, 运动, 图像, 成像, 像素, 线型光, 结构光, 传感器, 反射, 时间戳, 表面, deep, move, image, pixel, linear light, structured light, sensor, reflect, timestamp, surface

### C.    DOCUMENTS CONSIDERED TO BE RELEVANT

| Category* | Citation of document, with indication, where appropriate, of the relevant passages | Relevant to claim No. |
|---|---|---|
| A | CN 111721238 A (SHANGHAI TUYANG INFORMATION TECHNOLOGY CO., LTD.) 29 September 2020 (2020-09-29)<br>description, paragraphs [0011]-[0031] | 1-15 |
| A | CN 106067954 A (SAMSUNG ELECTRONICS CO., LTD.) 02 November 2016 (2016-11-02)<br>entire document | 1-15 |
| A | CN 112766328 A (BEIHANG UNIVERSITY) 07 May 2021 (2021-05-07)<br>entire document | 1-15 |
| A | CN 114549609 A (SHENZHEN RUISHI ZHIXIN TECHNOLOGY CO., LTD.) 27 May 2022 (2022-05-27)<br>entire document | 1-15 |
| A | US 2021334992 A1 (APPLE INC.) 28 October 2021 (2021-10-28)<br>entire document | 1-15 |

☐ Further documents are listed in the continuation of Box C.    ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **16 October 2023** | **01 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/110258**

| Patent document cited in search report | | | Publication date (day/month/year) | Patent family member(s) | | | Publication date (day/month/year) |
|---|---|---|---|---|---|---|---|
| CN | 111721238 | A | 29 September 2020 | None | | | |
| CN | 106067954 | A | 02 November 2016 | US | 2019045151 | A1 | 07 February 2019 |
| | | | | US | 10447958 | B2 | 15 October 2019 |
| | | | | US | 2021144327 | A1 | 13 May 2021 |
| | | | | US | 11431938 | B2 | 30 August 2022 |
| | | | | US | 2019379851 | A1 | 12 December 2019 |
| | | | | US | 10893227 | B2 | 12 January 2021 |
| | | | | KR | 20160124674 | A | 28 October 2016 |
| | | | | KR | 102470675 | B1 | 24 November 2022 |
| | | | | US | 2016309140 | A1 | 20 October 2016 |
| | | | | US | 10250833 | B2 | 02 April 2019 |
| CN | 112766328 | A | 07 May 2021 | None | | | |
| CN | 114549609 | A | 27 May 2022 | None | | | |
| US | 2021334992 | A1 | 28 October 2021 | WO | 2021216479 | A1 | 28 October 2021 |

Form PCT/ISA/210 (patent family annex) (July 2022)